# EUROPEAN PATENT SPECIFICATION

(11) **EP 3 455 308 B1**
(45) Date of publication and mention of the grant of the patent: **09.06.2021**
(21) Application number: 16919563.3
(22) Date of filing: 21.10.2016
(51) Int. Cl.: C09D 11/30, C09D 11/328, C09D 11/36, C09D 11/38, C09D 11/12

(54) **INKJET INKS**
TINTENSTRAHLTINTEN
ENCRES POUR IMPRESSION À JET D'ENCRE

(43) Date of publication of application: 20.03.2019
(73) Proprietor: Hewlett-Packard Development Company, L.P., Spring TX 77389 (US)
(72) Inventor: KHAVARI, Mehrgan, Corvallis, Oregon 97330 (US)
(74) Representative: ZBM Patents - Zea, Barlocci & Markvardsen
(86) International application number: PCT/US2016/058096
(87) International publication number: WO 2018/075060

(56) References cited:
- EP-A1- 2 206 753
- WO-A1-2012/121700
- WO-A1-2014/081418
- JP-A- H11 323 228
- JP-A- 2009 242 723
- US-A1- 2015 109 390
- US-A1- 2015 138 284

## Description

### BACKGROUND

Inkjet printing is a versatile method for recording images on various media surfaces for a number of reasons, including low cost, low printer noise, capability for high speed printing, and multicolor recording. Inkjet printing can deposit a variety of ink types including pigment based aqueous inks and dye based solvent inks. Dye based solvent inks can be particularly useful for ink jet printing on nonporous substrates. The interaction of the deposited ink and the media impacts the output of the printed material. For example, on polymer surfaces the low roughness and surface energy can result in poor performance by some inks.

### BRIEF DESCRIPTION OF THE DRAWINGS

FIG. 1 shows images of a series of inks staring with no leveling agent on the left and with increasing amounts of leveling agent as the series progresses to the right.
FIG. 2 shows a set of smear tests using progressively more of the leveling agent.
FIG. 3 shows smear test results comparing the control ink with 0.5 wt. % spiked PDMS ink on a variety of substrates.

### DETAILED DESCRIPTION

Inkjet printing involves controlled ejection of ink droplets. The ink droplets land on the substrate where the solvent is absorbed or evaporates to leave the colorant on the substrate, forming an image. Substrates have various properties that impact the behavior of deposited droplets. Porosity, roughness, surface energy, and polarity of the substrate can all impact the performance of an ink formulation.

Paper is a common substrate in printing applications. Paper is formed from a mat of interlocking fibers. Paper has gaps between the fibers into which deposited ink can wick. The wicking ink carries the colorant into the paper. The material dries around the fibers allowing mechanical interlock between the deposited ink solids and the paper fibers. Paper fibers generally include cellulose and similar polysaccharides. Polysaccharides are long chains of sugars and have ether linkages and hydroxyl groups, increasing the surface energy of these materials. The relatively high surface energy of paper fibers promotes wetting of the paper by inks, even inks with relatively high surface energy.

Paper has some drawbacks as well. The high surface energy makes is absorb water readily which can cause inks to run and reduce the mechanical strength of the paper. Accordingly, for some applications, such as outdoor use, other substrates, such as polymer sheeting, may be more useful. Many polymers are hydrophobic and repel water. This makes them resistant to rain and similar environmental water. However, water resistance also makes hydrophobic polymer surfaces more challenging to print with inks. Polymer surfaces also are generally nonporous, solid sheets as opposed to the fiber mat of paper. This reduces the surface area for attachment between the ink solids and the substrate. Polymeric surfaces may also have lower surface energy due to the lack of oxygen containing, or charged groups on the surface. This is especially true of polyolefin surfaces, such as polyethylene, which are composed of alkyl groups on the surface, and in some cases linear alkyl groups. Alkyl groups have very little charge non-uniformity, generally just transient non-uniformities to promote attraction between the alkyl group and other materials. These attractive forces are much lower than dipoles or hydrogen bonds found in other materials.

One consequence of the low surface energy of polyolefin materials is the tendency of deposited inks to not spread when deposited on the fluid. Instead, fluid is repelled and tends to form droplets with high contact angles. Doing so reduces the surface area of the droplet and the contact area between the droplet and the substrate; this minimizes the free energy of the droplet on the polyolefin surface. In contrast, when a fluid wets a surface, the surface area of the fluid is increased and the thickness of the fluid on the surface is decreased.

The appearance of ink on a surface is dependent upon the concentration of colorant and the path length of the light interacting with the colorant. This is similar the Beer-Lambert law which states that the light attenuation is proportional to the product of concentration and path length. Thus, if the ink droplet has a homogenous colorant concentration, then the intensity of the color will be roughly proportional to the thickness of the ink droplet. If the droplet is of uniform thickness, when the droplet dries the amount of ink solids, including colorant, will be uniform and the resulting color will be uniform. In contrast, if areas of the droplet are thicker, those areas will have a greater thickness of ink solids and colorant resulting in darker areas. Similarly, areas of thinner ink will be lighter. Thus, non-uniformity of the droplet during drying on the surface may produce non-uniform color intensity.

In the following description, for purposes of explanation, numerous specific details are set forth in order to provide a thorough understanding of the present systems and methods. It will be apparent, however, to one skilled in the art that the present apparatus, systems and methods may be practiced without these specific details. Reference in the specification to "an embodiment," "an example" or similar language means that a particular feature, structure, or characteristic described in connection with the example is included in at least that one example, but not necessarily in other examples. The various instances of the phrase "in one example" or similar phrases in various places in the specification are not necessarily all referring to the same example.

Concentrations, amounts, and other numerical data may be presented herein in a range format. The range format is used merely for convenience and brevity and should be interpreted flexibly to include not just the numerical values explicitly recited as the limits of the range, but also to include all the individual numerical values or sub-ranges encompassed within that range as if each numerical value and sub-range is explicitly recited. For example, a weight range of 1 wt. % to 20 wt. % should be interpreted to include not just the explicitly recited concentration limits of 1 wt. % to 20 wt. %, but also to include individual concentrations such as 2 wt. %, 3 wt. %, 4 wt. %, and sub-ranges such as 5 wt. % to 15 wt. %, 10 wt. % to 20 wt. %, etc.

All expressed concentrations in this specification and the associated claims are in terms of the formulated ink unless otherwise stated. For example, a statement that the ink comprises 50 wt. % to 98 wt. % solvent is on a formulated ink basis. All expressed concentrations are on a weight percentage (wt. %) or parts per million (ppm) of ink basis at standard temperature and pressure (STP) unless otherwise stated.

Printing fluids, or inks, include a solvent and a colorant. The colorant may include dye and/or pigment. The solvent solubilizes the colorant and upon evaporation or absorption, the colorant remains on the substrate to provide the printing or pattern desired.

Solvents include a wide variety of chemical species and include: water; alcohols, and non-alcohol organic solvents. Each solvent may interact differently with a substrate. Substrates may be categorized by their energy, roughness, porosity, and/or other properties. If a solvent has higher surface energy than the substrate, the solvent will tend to be repelled by the surface. For example, if the surface is a polyolefin with a low surface energy, then deposited inks will tend to bead up rather than spread. The addition of a leveling agent may increase the uniformity of inks deposited on a polyolefin surface.

For the purposes of this specification and the associated claims, a leveling agent is a hydrocarbon that increases the thickness uniformity of a fluid deposited on a polyolefin substrate. Examples of leveling agents include paraffins, isoparaffins, alkanes, alkenes, isoalkene, alkynes, etc.

For purposes of this specification and the associated claims, a polyolefin is a polymer whose surface comprises predominately hydrocarbon chains. Some examples of homogenous polymers that meet this definition include: polyethylene (PE), low density polyethylene (LDPE), linear low density polyethylene (LLDPE), high density polyethylene (HDPE), polypropylene (PP), oriented polypropylene (OPP), biaxially oriented polypropylene (BOPP), polymethylpentene (PMP), polybutene-1 (PB-1), polyisobutylene (PIB), ethylene propylene rubber (EPR), ethylene propylene diene monomer (M-class) rubber (EPDM rubber).

Another example is a block copolymers include both an alkane segment and a second segment that is below glass transition temperature (Tg) of the second segment at service temperature. The glassy blocks of the second segment may tend to form crosslinks within the bulk of the polymer; however, the surface of the block polymer will be predominantly composed of the alkyl segments due to their lower surface energy and relative mobility. Similarly, more structurally complex polymer forms that include a mobile alkyl segment that may preferentially occupy the surface meet the provided definition. An example of such a polymer is a brush or comb polymer with alkyl pendent groups. While a comb polymer has pendent groups of with a first functionality, a brush polymer has pendant groups from the same backbone atoms with different functionalities. For example, a brush polymer may have a silicone backbone with alternating silicon and oxygen atoms, where some of the silicon backbone atoms have both an alkyl chain and a polyether chain independently attached to same silicon atom (or any two pendant groups with different functionalities).

The polyolefin may be a homogenous or heterogeneous material. The polyolefin may be a layer or coating of a suitable polyolefin over a substrate, for example, polyethylene over paper. Such composite constructions may have lower costs, better mechanical properties, or other benefits over pure polyolefin sheet material.

Inkjet inks have challenges with deposition onto unmodified polyolefin surfaces. Unmodified polyolefin surfaces, for example, polyethylene and polypropylene surfaces, have low surface energy which tends to repel printing fluids with higher surface energies. The high contact angle between ink and substrate may produce droplets with non-uniform thicknesses which, upon drying, become areas with different amounts of colorant. Investigation has found leveling agents which when incorporated into the ink formulations reduce the thickness variation in deposited inks, which produces a more uniform colorant intensity.

Among other examples, this specification describes an inkjet ink including: a first solvent; a dye soluble in the first solvent; 0.1 wt. % to 1 wt. % of the ink of a perfluoropolyether; and 0.1 wt. % to 3 wt. % of the ink of a leveling agent dissolved in the ink.

Among other examples, this specification also describes an inkjet ink including: 50 wt. % to 96 wt. % of the ink of a first solvent including ethanol; 2 wt. % to 10 wt. % of the ink of a dye dissolved in the ink; 2 wt. % to 25 wt. % of the ink of a cosolvent including a ketone; 0.1 wt. % to 1 wt. % of the ink of a perfluoropolyether; and 0.1 wt. % to 3 wt. % of the ink of a leveling agent dissolved in the ink, wherein the leveling agent includes a paraffin.

This specification also describes a method of printing with an ink, the method including: depositing an ink onto a medium, wherein the ink includes: a first solvent; a dye soluble in the first solvent; 0.1 wt. % to 1 wt. % of the ink of a perfluoropolyether; and 0.1 wt. % to 3 wt. % of a hydrophobic leveling agent dissolved in the ink, wherein the leveling agent comprises an isoalkane, n-decane or 1-dodecene.

The ink includes a solvent, a colorant; a perfluoropolyether; and a leveling agent. The ink may also include other components, for example, cosolvent(s), polymeric surfactant(s), non-polymeric surfactant(s), non-perfluoropolyether anti-kogation agent(s), jettability additive(s), antimicrobial agent(s), biocide(s), viscosity modifier(s), material for pH adjustment or buffers, sequestering agent(s), preservative(s), and/or the like.

The inclusion of leveling has been found to increase the thickness uniformity in droplets of ink. This is particularly useful when the ink is deposited onto a polyolefin.

LEVELING AGENT: A variety of materials as defined in claim 1 have been found to function as effective leveling agents. In one example, the leveling agent is paraffin. The paraffin may be single species or a distribution of species. The paraffin may include multiple kinds of hydrocarbons, for example, alkanes, alkenes, and alkynes. The paraffin may be a liquid at room temperature. The paraffin may be a solid at room temperature and be dissolved in the ink formulation.

The leveling agent may be 0.1 wt. % to 3 wt. % of the ink. The leveling agent may preferably be 0.3 wt. % to 2 wt. % of the ink, and more preferably 0.5 wt. % to 1.2 wt. % of the ink.

In one example, the leveling agent is an iso-paraffinic additive. One example is Soltrol® 130 sold by Chevron-Phillips. This is a mixture of C₁₀-C₁₃ isoalkanes. It has an initial boiling point of approximately 186 C, a density of 0.7635 g/ml, and approximately 40 ppm aromatics.

Another example of such a material is Soltrol® 220 sold by Chevron-Phillips. It has an initial boiling point of approximately 233 C, a density of 0.811, and approximately 0.2 wt. % aromatics.

A synthetic isoparaffin or mixture thereof may be used as a leveling agent. Another example of such a material is Isopar® L sold by Exxon-Mobile. This is a mixture of C₁₁-C₁₃ isoalkanes. It has an initial boiling point of 189 C, a density of 0.767 g/ml, and generally less than 0.005 wt. % aromatics.

Another example of such a material is Isopar® M sold by Exxon-Mobile. 204. This is a mixture of C₁₁-C₁₆ isoalkanes. It has an initial boiling point of 218 C, a density of 0.788, and generally less than 2 wt. % aromatics.

Another example of such a material is Isopar® V sold by Exxon-Mobile. This is a mixture of C₁₄-C₁₈ isoalkanes. It has an initial boiling point of 272 C, a density of 0.821, and generally less than 0.1 wt. % aromatics.

An alkene may be used as a leveling agent, for example, 1-dodecene available from Sigma-Aldrich. It has an initial boiling point of 146 C and less than 1 wt. % aromatics.

An alkane may be used as the leveling agent, for example, n-decane available from Sigma-Aldrich. It has an initial boiling point of 174 C and less than 1 wt. % aromatics.

Linear hydrocarbons ranging from C₈ and greater, like alkanes and alkenes also benefit leveling. Examples of such species include: n-decane and 1-dodecene. These materials are readily available as single species formulations rather than as fractions which also helps to increase leveling, provide tuning of properties, and reduce drying time.

SOLVENT: The solvent may be 50 wt. % to 98 wt. % of the ink formulation. The solvent may be 70 wt. % to 90 wt. % of the ink formulation. The solvent may be 75 wt. % to 80 wt. % of the ink formulation.

The solvent may comprise: water, monohydric short chain alcohols, acetone, an organic acid, ethyl acetate, methyl acetate, 1-methoxy-2-propanol, diethylene glycol butyl ether, and/or mixtures thereof. In one implementation, the solvent solution includes approximately 10 wt. % to 20 wt. % of 1-methoxy-2-propanol, 10 wt. % to 85 wt. % monohydric short chain alcohol, and 5 wt. % to 80 wt. % acetone.

The solvent may be a non-aqueous solvent. In one example, the solvent is ethanol. The solvent may be methanol. The solvent may be a mixture of alcohols. The solvent may be a mixture of organic species including non-alcohol organics.

The solvent may be a ketone. In one example, the solvent is acetone. In another example, the solvent is a cyclic ketone. The ketone may include additional oxygen containing groups depending on the solubility of the selected colorants.

The solvent may be a low molecular weight carboxylic acid. In one example, the solvent comprises a carboxylic acid selected from: formic acid, acetic acid, propionic acid, butyric acid, and mixtures thereof. The carboxylic acid may be neutralized in solution to reduce damage to the substrate and/or printhead.

The solvent may be a low molecular weight organic. In one example, the solvent includes a liquid, linear alkane such as octane or nonane. The solvent is a liquid at room temperature but can be transitioned to a gas by a thermal resister in an inkjet. The use of an alkane or similar liquid may enhance deposition into a polyolefin film. Alkanes also have relatively low surface energy, increasing spreading on polyolefin surfaces compared with, for example, water or ethanol.

The ink may be substantially water free. For example, the ink may have a water concentration of no more than 1 wt. %. The ink may have a water concentration of no more than 0.5 wt. %. The ink may have a water concentration of no more than 1000 ppm. The ink may have a water concentration of no more than 200 ppm.

COSOLVENTS: The ink may include a cosolvent. Any of the solvents described above may be used as a cosolvent. The cosolvent may be a ketone. The cosolvent may be 5 wt. % to 20 wt. % of the ink. The cosolvent may be 5 wt. % to 10 wt. % of the ink. Some suitable ketones include acetone and cyclohexanone. The ink may include a plurality of cosolvents. In one example, the ink comprises 5 wt. % to 10 wt. % acetone and 5 wt. % to 10 wt. % cyclohexanone. The ketone cosolvent(s) may collectively comprise 14 wt. % to 16 wt. % of the ink.

The use of a cosolvent may increase the solubility of a colorant or another component of the dye. For example, many of the identified leveling agents have relatively poor solubility in water. The use of a cosolvent, such as acetone, may increase reduce phase separation or increase the maximum concentration of some components.

PERFLUOROPOLYETHER: Previous disclosures by this inventor have discussed the benefits of perfluoropolyethers in inkjet ink formulations. The inclusion of perfluoropolyether increases decap time. See, e.g., U.S. Patent No. 9,017,467, incorporated by reference into this application. In one example, the perfluoropolyether is Fluorolin® A10 available from Solvay Solexis.

COLORANT: The ink contains a colorant. The colorant may include a dye or a plurality of dyes. The colorant may include a pigment or a plurality of pigments. The colorant may be soluble in the solvent. The colorant may be soluble in a cosolvent. In one example, the colorant includes an alcohol soluble dye and a ketone soluble dye.

The use of multiple dyes in the ink formulation may provide benefits over the use of a single dye. Multiple dyes may provide superior performance at a lower cost. Multiple dyes may allow brighter or more robust colors compared with single dye. Multiple dyes may allow better tuning of secondary properties like gloss in the printed ink. However, the use of multiple dyes may provide additional challenges in formulation of the ink. Multiple dyes may use of a cosolvent to obtain the desired dye concentrations. Multiple dyes may introduce more incompatibilities for the ink formulation, narrow acceptable storage conditions, or limit process ranges.

Examples of suitable dyes include the Sudan® dyes available from BASF, such as: Sudan® Blue 670, C.I. Solvent Blue 35; Sudan® Black X60; and Sudan® Orange 220. Other suitable dyes, depending on solvents and cosolvents, include Oil Blue N, C.I. Solvent Blue 14 available from Aldrich Chemical Company, Inc., Oil Brown 102 available from Passaic Color & Chemical Company; Oil Red 234 available from Passaic Color & Chemical Company; C.I. Solvent Blue 48 available from Ciba-Geigy; Oracet® Pink RF, C.I. Pigment Red 181 available from Ciba-Geigy; Orasol® Black RL, C.I. Solvent Black 29 available from Ciba-Geigy; Orasol Red G, C.I. Solvent Red 125 available from Ciba-Geigy; Orasol Yellow 2GLN, C.I. Solvent Yellow 88 available from Ciba-Geigy; Savinyl® Blue GLS, C.I. Solvent Blue 44 available from Sandoz Chemicals; Savinyl® Fire Red 3GLS PAT, C.I. Solvent Red 124 available from Sandoz Chemicals; and Savinyl® Yellow RLS, C.I. Solvent Yellow 83:1. The Orasol® family of dyes from BASF including Black X55 and Orange 247, and the Valifast® family of dyes including Valifast Black 3808, C.I. Solvent Black 29 from Oriental Chemical Company, Ltd have also been found to perform well..

Further, depending on the particular solvent and cosolvents used, solvent soluble dyes may be used. For example, the dyes below described using Color Index (C.I.) Generic Names are acceptable dyes for use in these ink formulations. Black solvent dyes may include C.I. Solvent Black 5, 7, 27, 28, 29, 34, 35, 45, 46, and 48. Blue solvent dyes may include C.I. Solvent Blue 4, 5, 6, 35, 38, 48, 59, 67, 70, 104, and 136. Violet solvent dyes may include C.I. Solvent Violet 8, 9, 11, 14, and 38. Brown solvent dyes may include C.I. Solvent Brown 1, 3, 5, 20, 42, 43, 44, 48 and 52. Orange solvent dyes may include C.I. Solvent Orange 3, 11, 20, 25, 54, 60, 62, 63, 86, 99, and 105. Red solvent dyes may include C.I. Solvent Red 1, 23, 29, 49, 119, 122, 125, 127, 130, 132, 135, 149, 160, 164, 168, 169, 172 and 233. Yellow solvent dyes may include C.I. Solvent Yellow 10, 13, 14, 19, 25, 28, 33, 88, 89, 114, 146 and 163. Dyes may be used in individually or in combination with other dyes, pigments, and/or other colorants.

ANTI-KOGATION AGENT: The ink may include the anti-kogation agent. Kogation refers to the deposit of dried ink on a heating element of a thermal inkjet (TIJ) printhead. Anti-kogation agent(s) assists in preventing the buildup of kogation. Examples of suitable anti-kogation agents include oleth-3-phosphate (commercially available as CRODAFOS® O3A or CRODAFOS® N-3 acid from Croda Int.) or dextran 500k. Other examples of the anti-kogation agents include CRODAFOS® HCE (phosphate-ester from Croda Int.), CRODAFOS® N10 (oleth-10-phosphate from Croda Int.), or DISPERSOGEN® LFH (polymeric dispersing agent with aromatic anchoring groups, acid form, anionic, from Clariant), etc. The anti-kogation agent may be present in the inkjet ink in an amount ranging from about 0.05 wt. % to about 2 wt. % of the ink.

BIOCIDE: When a biocide is utilized, a suitable amount of the biocide may range from about 0.05 wt. % to about 0.5 wt. % of the ink. The upper limit for the biocide(s) may depend upon the type of biocide, its toxicological effect, and/or regulatory requirements. For example, the upper limit for PROXEL® GXL (Arch Chemicals, Inc., Norwalk, CT) is 0.2 wt. %. Other biocides include, for example, PROXEL® GXL, KORDEK® MLX (The Dow Chemical Co.), and/or BIOBAN® CS-1246 (The Dow Chemical Co.). NUOSEPT® 95, available from Huls America (Piscataway, N.J.); PROXEL® GXL, available from ICI Americas (Wilmington, Del.); and glutaraldehyde, available from Union Carbide Company (Bound Brook, N.J.) under the trade designation UCARCIDE® 250.

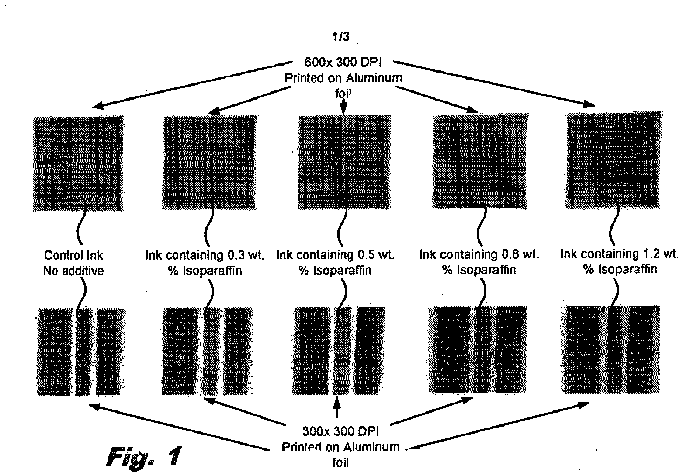

EXAMPLES: Turning now to the figures, FIG. 1 shows images of a series of inks staring with no leveling agent on the left and with increasing amounts of leveling agent as the series progresses to the right.

The top images are printed at 600 dots per inch (dpi) and the bottom images at 300 dpi. These images were deposited on aluminum (an oxide surface). The uniformity of the colorant distribution can be seen increasing with increasing amounts of leveling agent, in this case isoparaffin, specifically Soltrol® 130. Uniformity of ink produces faster drying times, avoiding adhesion of stacked sheets by the ink and smearing of the ink.

The formulation of an ink using in the images of FIG. 1 is described below. This formulation includes two ketone cosolvents, perfluoropolyether, and a leveling agent in an ethanol solvent. The leveling agent is shown at 0 wt. %, 0.3 wt. %, 0.5 wt. %, 0.8 wt. % and 1.2 wt. % of the ink. With all spiked inks showing visible increases in leveling over the control ink.

**Formula 1:**

| Role | Component | Wt. % of ink |
|---|---|---|
| Solvent | ethanol (pure) | 77 |
| Cosolvent | cyclohexanone | 9 |
| Cosolvent | acetone | 6 |
| Colorant | Valifast® Black 3808 | 5 |
| Colorant | Orasol® Orange 247 | 1 |
| Adhesion | Neocryl® B-818 from DSM Coating Resins, LLC. | 1.8 |
| Decap | Perfluoropolyether, Fluorolin® A10 | 0.3 |
| Dispersant | Crodafos® T6A from Croda International | 0.2 |
| Leveling | Soltrol® 220 from Chevron-Phillips | Various |

This formulation was compared with a control formulation without the leveling agent. In the control, the weight percentage of each component is scaled by the inverse of the wt. % of the leveling agent.

As seen in FIG. 1, the inclusion of leveling agent produced visible increase in the uniformity of the dye intensity of deposited ink. In contrast, the control formulation had visible consolidation of the ink and areas of high colorant density and areas of low colorant density in the printed areas. The increased leveling shows in increased rub resistance and time to dry. While even the lowest concentration of leveling agent tested produced increased leveling over the control, higher concentrations produced better results.

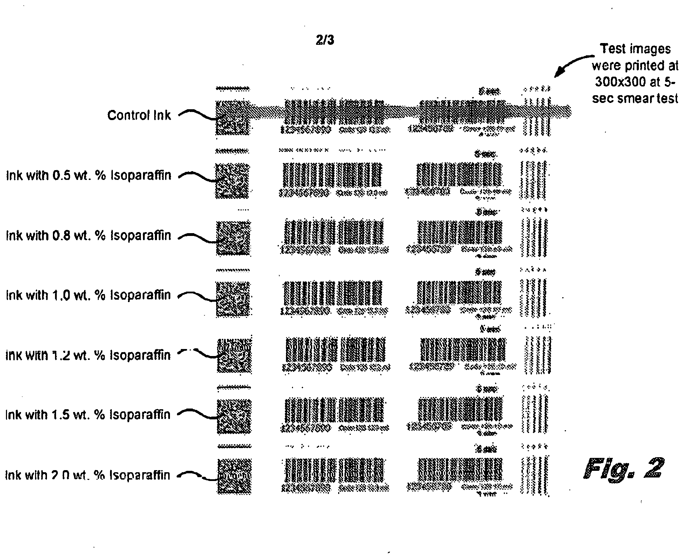

FIG. 2 shows a set of smear tests using progressively more of the leveling agent. The inks are shown with progressively larger spikes of isoparaffin, specifically Soltrol 220. The ink was printed onto a varnish substrate (Gans® SDV available from Gans Ink & Supply) and rubbed at 5 seconds after printing. Increased leveling is clearly visible at even the lowest tested concentration of leveling agent (0.5 wt. % for this test) and continued increases in rub resistance is seen with increasing concentration to approximately 1.5 wt. % in this test. The 2.0 wt. % ink was similar to the 1.5 wt. % ink, with both showing excellent rub resistance at 5 seconds after printing.

Testing the drying time found that with a 1.2 wt. % of Soltrol® 220, the ink still showed some smearing at 3 seconds, acceptable performance at 5 seconds, and excellent performance at 7 seconds and 10 seconds. In contrast, the control ink showed unacceptable smearing at all tested times, including 10 seconds. Accordingly, inclusion of the leveling agent cut the drying time by more than 50%.

Testing conducted on polyethylene terephthalate (PET) film appeared similar to the images shown in FIG. 2. Namely inclusion of the leveling agent produced good rub resistance at 5 seconds after printing and excellent rub resistance at 7 and 10 seconds after printing. While the control ink without the leveling agent showed unacceptable rubbing at all tested time points (3, 5, 7, and 10 seconds).

Smear testing on biaxially oriented polypropylene (COPP) showed unacceptable rub resistance at 1.2 wt. % Soltrol® 200 at 3, 5, and 7 seconds. At 10 seconds, some increase in rub resistance was evident but the ink was not fully rub resistant. Although not wishing to be bound by any particular theory, it is believed that the similarity between the BOPP surface's alkyl groups and the isoparaffin of the leveling agent reduced the impact of the leveling agent.

Smear testing on polyvinyl chloride (PVC) with 1.2 wt. % Soltrol® 200 showed some increased rub resistance over the controls. However, rubbing was still evident in at the 5 second test point. At 7 seconds, a trace of rubbing was visible and at 10 seconds, the results appeared acceptable.

Smear testing on plasma treated low density polyethylene (LDPE) with 1.2 wt. % Soltrol 200 showed increased rub resistance over the control. However, the 5 second time point still showed rubbing. The 7 and 10 second time points showed traces of rubbing but were acceptable. All time points of the control showed unacceptable rubbing.

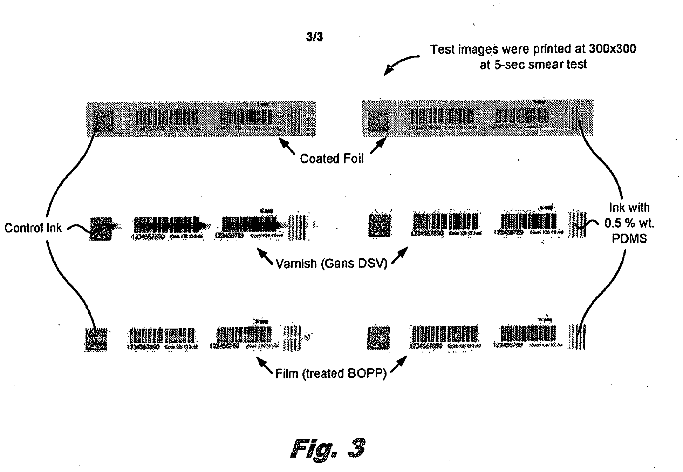

FIG. 3 shows smear test results comparing the control ink with 0.5 wt. % spiked PDMS ink on a variety of substrates. The testing results are shown at 5 min after printing using 300 dpi printing density. Three different substrates are shown: coated foil, varnish, and treated BOPP film. The control ink showed acceptable rub resistance on the coated foil and rubbing on the varnish and treated BOPP films. The PDMS used in this test was Tego® Glide A-115 available from available from Evonik Resource Efficiency GmbH. The 0.5 wt. % PDMS containing ink showed increased rub resistance compared with the control. The varnish substrate showing acceptable rub resistance and the treated BOPP substrate still showing some rubbing damage.

## Claims

1. An inkjet ink comprising:
a first solvent;
a dye soluble in the first solvent;
0.1 wt. % to 1 wt. % of the ink of a perfluoropolyether; and
0.1 wt. % to 3 wt. % of the ink of a leveling agent dissolved in the ink,
wherein the leveling agent comprises an isoalkane, n-decane or 1-dodecene.

2. The ink of claim 1, wherein the leveling agent is 0.3 wt. % to 0.6 wt. % of the ink.

3. The ink of claim 1, wherein the first solvent is an alcohol.

4. The ink of claim 1, further comprising a second solvent, the leveling agent being soluble in the second solvent.

5. The ink of claim 4, wherein first solvent is an alcohol and the second solvent is a non-alcohol organic liquid.

6. The ink of claim 5, wherein the second solvent comprises a ketone.

7. The ink of claim 1, wherein the leveling agent comprises a mixture of C₁₂-C₁₄ isoalkanes, the C₁₂-C₁₄ isoalkanes comprising 0.1 wt. % to 3 wt. % of the ink.

8. An inkjet ink comprising:
50 wt. % to 96 wt. % of the ink of a first solvent comprising ethanol;
2 wt. % to 10 wt. % of the ink of a dye dissolved in the ink;
2 wt. % to 25 wt. % of the ink of a cosolvent comprising a ketone;
0.1 wt. % to 1 wt. % of the ink of a perfluoropolyether; and
0.1 wt. % to 3 wt. % of the ink of a leveling agent dissolved in the ink,
wherein the leveling agent comprises a paraffin, wherein the paraffin is an isoalkane.

9. A method of printing with an ink, the method comprising:
depositing an ink onto a medium, wherein the ink comprises:
a first solvent;
a dye soluble in the first solvent;
0.1 wt. % to 1 wt. % of the ink of a perfluoropolyether; and
0.1 wt. % to 3 wt. % of the ink of a leveling agent dissolved in the ink,
wherein the leveling agent comprises an isoalkane, n-decane or 1-dodecene.

## Patentansprüche

1. Tintenstrahltinte, die Folgendes umfasst:
ein erstes Lösungsmittel;
einen in dem ersten Lösungsmittel löslichen Farbstoff;
0,1 Gew.-% bis 1 Gew.-% der Tinte eines Perfluorpolyethers; und
0,1 Gew.-% bis 3 Gew.-% der Tinte eines in der Tinte aufgelösten Egalisiermittels, wobei das Egalisiermittel ein Isoalkan, n-Decan oder 1-Dodecen umfasst.

2. Tinte nach Anspruch 1, wobei das Egalisiermittel 0,3 Gew.-% bis 0,6 Gew.-% der Tinte beträgt.

3. Tinte nach Anspruch 1, wobei das erste Lösungsmittel ein Alkohol ist.

4. Tinte nach Anspruch 1, die ferner ein zweites Lösungsmittel umfasst, wobei das Egalisiermittel in dem zweiten Lösungsmittel löslich ist.

5. Tinte nach Anspruch 4, wobei das erste Lösungsmittel ein Alkohol ist und das zweite Lösungsmittel eine nicht alkoholische organische Flüssigkeit ist.

6. Tinte nach Anspruch 5, wobei das zweite Lösungsmittel ein Keton umfasst.

7. Tinte nach Anspruch 1, wobei das Egalisiermittel eine Mischung von C₁₂-C₁₄-Isoalkanen umfasst, wobei die C₁₂-C₁₄-Isoalkane 0,1 Gew.-% bis 3 Gew.-% der Tinte umfassen.

8. Tintenstrahltinte, die Folgendes umfasst:
50 Gew.-% bis 96 Gew.-% der Tinte eines ersten Lösungsmittels, das Ethanol umfasst;
2 Gew.-% bis 10 Gew.-% der Tinte eines Farbstoffs, der in der Tinte aufgelöst ist;
2 Gew.-% bis 25 Gew.-% der Tinte eines Co-Lösungsmittels, das ein Keton umfasst;
0,1 Gew.-% bis 1 Gew.-% der Tinte eines Perfluorpolyethers; und
0,1 Gew.-% bis 3 Gew.-% der Tinte eines in der Tinte aufgelösten Egalisiermittels, wobei das Egalisiermittel ein Paraffin umfasst, wobei das Paraffin ein Isoalkan ist.

9. Druckverfahren mit einer Tinte, wobei das Verfahren Folgendes umfasst:
Abscheiden einer Tinte auf ein Medium, wobei die Tinte Folgendes umfasst:
ein erstes Lösungsmittel;
einen in dem ersten Lösungsmittel löslichen Farbstoff;
0,1 Gew.-% bis 1 Gew.-% der Tinte eines Perfluorpolyethers; und
0,1 Gew.-% bis 3 Gew.-% der Tinte eines in der Tinte aufgelösten Egalisiermittels, wobei das Egalisiermittel ein Isoalkan, n-Decan oder 1-Dodecen umfasst.

## Revendications

1. Encre pour impression à jet d'encre, comprenant :
un premier solvant ;
un colorant soluble dans le premier solvant ;
de 0,1 % en poids à 1 % en poids de l'encre d'un perfluoropolyéther ; et
de 0,1 % en poids à 3 % en poids de l'encre d'un agent égalisant dissous dans l'encre, l'agent égalisant comprenant un isoalcane, un n-décane ou un 1-dodécène.

2. Encre selon la revendication 1, l'agent égalisant étant de 0,3 % en poids à 0,6 % en poids de l'encre.

3. Encre selon la revendication 1, le premier solvant étant un alcool.

4. Encre selon la revendication 1, comprenant en outre un second solvant, l'agent égalisant étant soluble dans le second solvant.

5. Encre selon la revendication 4, le premier solvant étant un alcool et le second solvant étant un liquide organique sans alcool.

6. Encre selon la revendication 5, le second solvant comprenant une cétone.

7. Encre selon la revendication 1, l'agent égalisant comprenant un mélange d'isoalcanes en C₁₂ à C₁₄, les isoalcanes en C₁₂ à C₁₄ comprenant 0,1 % en poids à 3 % en poids de l'encre.

8. Encre pour impression à jet d'encre, comprenant :
de 50 % en poids à 96 % en poids de l'encre d'un premier solvant comprenant de l'éthanol ;
de 2 % en poids à 10 % en poids de l'encre d'un colorant dissous dans l'encre ;
de 2 % en poids à 25 % en poids de l'encre d'un cosolvant comprenant une cétone ;
de 0,1 % en poids à 1 % en poids de l'encre d'un perfluoropolyéther ; et
de 0,1 % en poids à 3 % en poids de l'encre d'un agent égalisant dissous dans l'encre, l'agent égalisant comprenant une paraffine, la paraffine étant un isoalcane.

9. Procédé d'impression au moyen d'une encre, le procédé comprenant :
le dépôt d'une encre sur un support, l'encre comprenant :
un premier solvant ;
un colorant soluble dans le premier solvant ;
de 0,1 % en poids à 1 % en poids de l'encre d'un perfluoropolyéther ; et
de 0,1 % en poids à 3 % en poids de l'encre d'un agent égalisant dissous dans l'encre, l'agent égalisant comprenant un isoalcane, un n-décane ou un 1-dodécène.
